# EUROPEAN PATENT SPECIFICATION

(11) **EP 2 447 414 B1**
(45) Date of publication and mention of the grant of the patent: **25.10.2017**
(21) Application number: 11186575.4
(22) Date of filing: 25.10.2011
(51) Int. Cl.: D21B 1/32, D21C 5/02

(54) **Paper recycling**
Papierrecycling
Recyclage de papier

(30) Priority: 26.10.2010 GB 201018063
(43) Date of publication of application: 02.05.2012
(73) Proprietor: Office2Office plc, Norwich, Norfolk NR3 1PD (GB)
(72) Inventor: Moate, Simon, Norwich, Norfolk NR3 1PD (GB)
(74) Representative: Daniels, Jeffrey Nicholas

(56) References cited:
- Jupp Trauth, Evelyn Schönheit: "Kristischer Papierbericht 2005", Initiative 2000 plus , 2005, page 44PGS, XP002670005, Retrieved from the Internet: URL:http://www.initiative-papier.de/docs/P apier_m.Aufruf.pdf [retrieved on 2012-02-21]

## Description

The present invention concerns an improved process for making recycled paper. The process is particularly advantageous, since it employs substantially all of the waste from paper that is typically used in offices. There is no need to remove certain undesirable papers from the waste, and yet the recycled paper product has acceptable properties for further office use, despite fibres from the undesirable papers being present in the recycled paper.

Recycling is desirable, not only for environmental and sustainability reasons, but also because it maximises the efficiency of use of limited resources, which has a clear economic benefit for all. Recycled paper is typically formed from waste paper that is collected from homes, offices and other sources in various different schemes. These typically include governmental schemes funded by the state to promote recycling for the benefit of the environment, or by private enterprise which may be interested in the business opportunity that recycling affords.

Recycled paper is formed in a typical paper-making process, with the exception that the feedstock is re-pulped waste paper rather than virgin pulp (although some virgin pulp may be added in certain cases). Steps may need to be taken to remove undesirable impurities that are present in the waste feedstock, and to remove ink or other materials that are present in the used paper forming the feedstock.

Generally, there are three categories of feedstock for making recycled paper. These include mill broke, pre-consumer waste, and post-consumer waste. Mill broke contains paper scrap from the manufacture of paper. Pre-consumer waste contains material which has been discarded before it was ready for consumer use. Post-consumer waste contains material discarded after consumer use, such as newspaper, office waste, and residential waste.

A typical method for producing recycled paper comprises adding water to the waste and then pulping it, screening, cleaning and de-inking through a number of processes until it is suitable for papermaking. Initially, recovered paper is sorted and graded then delivered to a paper mill. Having reached the paper mill, it is 'slushed' into pulp and large non-fibrous contaminants are removed (for example staples, plastic, glass etc.). The fibres are cleaned and the resulting pulp is filtered and screened to make it suitable for papermaking.

Before new recycled paper can be made, the printing inks have to be removed to increase whiteness and purity. The ink is usually removed in a flotation process where air is blown into the solution. The ink adheres to bubbles of air and rises to the surface from where it is separated. A certain amount of foaming is desirable at this stage, but care must also be taken to ensure that the quantity of foam produced is not too high. After the ink is removed, additives are introduced, such as optical brightening agents. Then papermaking begins.

In the papermaking process, water is added to produce a thinner suspension, and this suspension is sprayed onto a moving wire mesh. The water is then removed by gravity and/or suction, and the fibres begin to spread into a thin mat (sheet formation). The web is then removed from the wire mesh and pressed to remove water. It is then dried.

After drying, some papers may also undergo further processing, such as sizing and calendaring. The paper is then wound into a reel. Once the paper is used, it can be recycled and the process starts again.

The type of starting materials employed in making recycled paper depend on the type of paper that is being manufactured. For example, when producing graphic papers, the paper mill needs high quality raw materials. This may involve employing as little inked paper as possible, and might also involve a higher quantity of paper from chemical pulp, which produces the strongest fibres.

Typically, in known processes for producing recycled paper it has been assumed that acceptable paper cannot be produced using a mixture of all office waste, unless large quantities of optical brighteners are added. However, these agents are expensive, and environmentally damaging, and are not desirable to use.

To avoid this problem, undesirable paper, such as wrapping paper, packaging paper and 'sticky paper' (paper comprising an amount of adhesive, such as post-it™ notes) is typically removed from the waste paper to 'decontaminate' it. However, this step increases expense, and requires that at least some of the waste paper must be diverted and used for fuel rather than recycled.
Jupp Trauth and Evelyn Schönheit, in "Kritischer Papierbericht 2005 Herausgegeben von der Initiative 2000 plus", discuss waste paper collection, the labelling of FSC paper certification systems, compliance with environmental and social standards for paper, selection and processing of the fibre raw material, and strategies aimed at reducing paper consumption.
The present invention aims to address the problems set out above in known papers and processes. Accordingly, the present invention aims to provide a process for producing an acceptable recycled paper that can be formed from substantially all office waste paper without employing optical brightening agents.
Accordingly, the present invention provides a method for making recycled paper defined in claim 1, which method comprises forming recycled paper from a waste paper starting material without employing an optical brightening agent, wherein the waste paper starting material comprises a contaminated mix. Further features of the present invention are defined in the dependent claims.
The present invention provides a method for making recycled paper, which recycled paper comprises fibres from a waste paper starting material comprising a contaminated mix, which recycled paper does not comprise an optical brightening agent added during recycling. In one embodiment of the invention, the recycled paper is suitable for office use. This paper is typically, but not exclusively, paper that is suitable for use in photocopying, printing such as laser printing and inkjet printing, typing and the like.
In the context of the present invention, a contaminated mix means paper consisting of post-consumer waste, comprising at least one type of contaminant material and/or impurity (typically, but not exclusively, one type of paper) that is undesirable for making recycled paper suitable for office use. Such undesirable contaminant material and/or impurity is not especially limited, provided that it is presently considered undesirable for making recycled paper suitable for office use by the paper-making industry. Such undesirable contaminant material and/or impurity may include, for example, one, more, or all materials selected from packaging paper, wrapping paper, sticky paper, paper coated with a plastic or other polymer, brown paper, card, plastic, stickies, staples, and other impurities found in office paper and paper-based office articles. The contaminated mix consists or comprises unsorted office waste paper.
In some embodiments, the contaminated mix contains up to 10% by mass of the contaminant material. More typically the contaminant mix contains up to 7.5% by mass of the contaminant material. In other embodiments, the contaminated mix comprises more than 1%, preferably more than 2% and more preferably more than 3% by mass of the contaminant material. In more preferred embodiments the contaminated mix contains from 1-10%, from 2-9%, from 3-8% and most preferably from 4-7% of contaminant material by mass. The the contaminated mix comprises office waste paper that has not been separated from any paper after collection. This is advantageous, since it reduces the cost by avoiding a separation step, and additionally increases that proportion of waste that is recycled. Typically, the contaminated mix comprises substantially all types of paper commonly employed in offices. The contaminated mix can also include shredded waste obtained from the destruction of confidential documents.

The method includes the following steps (a) to (d):
(a) pulping the waste paper starting material without prior sorting to form a paper pulp;
(b) removing impurities from the paper pulp;
(c) decolourising and/or de-inking the paper pulp; and
(d) forming the recycled paper from the paper pulp.
Steps (b) and (c) may be carried out in any order, but preferably step (b) precedes step (c).

In step (a), the method of pulping is not especially limited, and any method typically employed in known paper recycling methods may be used. In some embodiments, in step (a) the paper pulp formed has a pulp consistency of 10% or above, more preferably 15% or above, and more preferably still 20% or above.

In step (b), the method of removing impurities is not especially limited, and any method typically employed in known paper recycling methods may be used, to remove whatever impurities are present. This will depend on the nature of the waste. In some embodiments, in step (b) the impurities comprise one or more impurities selected from discoloured fibres, staples, plastic such as polyethylene, adhesive labels, dirt, glass, and other non-paper-based materials.

In some embodiments step (b) comprises a method of screening. The type of screening employed is not especially limited, and any method typically employed in known paper recycling methods may be used. In some embodiments, screening is carried out at a pulp consistency of 0.1-5%, more preferably from 0.4-3.0%, more preferably from 0.5-1.0% and/or from 2-2.8%. In some embodiments screening may be optimized to remove discoloured fibres, such as brown fibres.

In step (c), the method of decolourising and/or de-inking is not especially limited, and any method typically employed in known paper recycling methods may be used. In some embodiments, step (c) comprises one, other, or both of the decolourising step and the deinking step. In some embodiments step (c) comprises a decolourising step and/or a de-inking step, which does not employ a brightening agent. In other embodiments step (c) comprises a decolourising step which does employ a brightening agent. The brightening agent is not especially limited, provided that it is not an optical brightening agent. In typical embodiments, the brightening agent is an agent that is not harmful to the environment. The brightening agent is typically employed to ensure that the recycled paper has a desired brightness. The desired brightness of the paper is not especially limited, and may be selected according to the use to which the recycled paper will be put. In some embodiments, the desired brightness is from 65-100% ±2.5%, or 70-100% ±2.5%, in accordance with ISO 2470, more preferably the brightness is 70%±2.5%, 75%±2.5%, 80%±2.5%, 85%±2.5%, 90%±2.5, 95%±2.5% or 100%±2.5% in accordance with ISO 2470. In some embodiments the brightening agent comprises hydrogen peroxide and/or sulphur dioxide. Typically the hydrogen peroxide is employed in a quantity that is not harmful to the environment, and may be employed in a concentration of 1% by weight, or less, more preferably about 0.8% by weight. Typically, sulphur dioxide is employed as a brightening agent where brightness of 85% or more is desired, for example brightnesses of 85%±2.5%, 90%±2.5, 95%±2.5% or 100%±2.5%.
In step (e), the method of forming recycled paper from the pulp is not especially limited, and any method typically employed in known paper recycling methods may be used. In some embodiments, step (e) comprises forming a web of wet paper and then drying the web to form the recycled paper.
In some embodiments of the present invention no virgin fibre is added to the waste paper starting material during the method. This ensures that the final recycled paper is formed entirely from waste paper, and reduces the environmental impact.
As has been mentioned above, the purpose of the recycled paper produced is not especially limited. Typically it is paper suitable for office use. In certain embodiments it is suitable for use in photocopying, printing such as inkjet printing and laser printing, and/or typing. Generally, for such embodiments, the recycled paper has a desired whiteness and a desired brightness. As has been mentioned, the desired whiteness of the paper is not especially limited, provided that the paper is of acceptable quality. The whiteness may be selected according to the use to which the recycled paper will be put. In some embodiments, the desired whiteness is from 65-100 ±2.5, or 70-100 ±2.5, in accordance with ISO 11475, more preferably wherein the whiteness is 70±2.5, 75±2.5, 80±2.5, 85±2.5, 90±2.5, 95±2.5 or 100±2.5 in accordance with ISO 11475. The whiteness may be selected by use of the brightening agent, as described above. Similarly, the desired brightness of the paper is not especially limited, and may be selected according to the use to which the recycled paper will be put. In some embodiments, the desired brightness is from 65-100% ±2.5%, or 70-100% ±2.5%, in accordance with ISO 2470, more preferably wherein the brightness is 70%±2.5%, 75%±2.5%, 80%±2.5%, 85%±2.5%, 90%±2.5, 95%±2.5% or 100%±2.5% in accordance with ISO 2470. The brightness may be selected by initially sorting the waste, and/or by use of the brightening agent, as described above.
As has been stated, the recycled paper formed in accordance with the invention comprises fibres from a waste paper starting material comprising a contaminated mix. Typically, the recycled paper is formed from a waste paper starting material consisting of a contaminated mix, that is to say the paper is formed only from contaminated mix waste paper starting material, and not from any other waste paper starting material. In such as embodiment, the recycled paper consists of fibres derived from contaminated mix and not from any other source.
The paper formed in accordance with the invention is suitable for use in producing an article comprising paper as defined above, and a packaging material comprising paper as defined above. The article and the packaging material are not especially limited. Typically the article may comprise any article commonly formed from paper, such a greetings card, a drinking cup, a file or folder and the like. Similarly the packaging material may comprise any packaging material commonly formed from paper, such as a box, an envelope and the like. The invention will now be explained further with reference to the following non-limiting specific embodiments, which are provided by way of example only.

### EXAMPLES

### Example 1 - Formation of office paper

Waste paper is collected from government offices. No initial sorting is carried out. The waste paper comprises substantially all office waste paper and consists entirely of post-consumer waste. The paper is then transported to the mill for processing.

Water is added to the waste and then the waste is pulped. This process is performed in a large vessel, known as a 'pulper'. The waste paper starting material is diluted with up to 100 times its weight in water and then subjected to mechanical mixing using rotor blades.

The stock is then screened. It is 'slushed' into a pulp consistency of 20% or above and large non-fibrous contaminants are removed (for example staples, plastic, glass etc.). The resulting pulp is further filtered and screened to remove further impurities.

The printing inks are then removed to increase whiteness and purity (de-inking). The fibres are progressively cleaned and the ink removed in a flotation process where air is blown into the solution. The ink adheres to bubbles of air and rises to the surface from where it is separated.

Subsequent to this process, the stock may be brightened (e.g. with an environmentally safe non-optical brightening agent), and further additives introduced. The stock is then be transferred to a papermaking apparatus, to make paper.

To make paper, more water is added to produce a fibre suspension of as little as 1-10 parts fibre to 1000 parts water. The resulting suspension is sprayed through a thin, horizontal slit on to a moving wire mesh. The water is then removed using gravity and suction in a process known as sheet formation. The fibres spread and consolidate into a thin mat, which is a web of wet paper. This web of wet paper is then lifted from the wire mesh and squeezed between a series of presses where its water content is lowered to about 50%. It then passes around a series of cylinders, heated to temperatures in excess of 100°C, where drying takes place. Here the water content is lowered to between 5% and 8%.

After drying, some papers may also undergo surface treatments e.g. sizing and calendaring - a process consisting of smoothing the surface of the paper to produce a glazed or glossy appearance. The paper is then wound into a reel, and may eventually be cut an appropriately packaged for delivery.

## Claims

1. A method for making recycled paper, which method comprises forming recycled paper from a waste paper starting material without employing an optical brightening agent, wherein the waste paper starting material comprises unsorted office waste paper, and wherein the method includes the following steps:
(a) pulping the waste paper starting material without prior sorting to form a paper pulp;
(b) removing impurities from the paper pulp;
(c) decolourising and/or de-inking the paper pulp; and
(d) forming the recycled paper from the paper pulp.

2. A method according to claim 1, wherein the unsorted office waste paper comprises one or more materials selected from packaging paper, wrapping paper, sticky paper, paper coated with a plastic or other polymer, brown paper, card, and stickies,
and/or wherein the unsorted office waste paper comprises substantially all types of paper commonly employed in offices.

3. A method according to claim 1 or 2,
wherein in step (a) the paper pulp formed has a pulp consistency of 10% or above, more preferably 15% or above, more preferably still 20% or above,
and/or wherein in step (b) the impurities comprise one or more impurities selected from discoloured fibres, adhesive labels, and dirt,
and/or wherein step (b) comprises screening, preferably wherein screening is carried out at a pulp consistency of 0.1-5%, more preferably from 0.4-3.0%, more preferably from 0.5-1.0% and/or from 2-2.8%, preferably wherein screening is optimized to remove discoloured fibres, such as brown fibres,
and/or wherein step (c) comprises a decolourising step and/or a deinking step which does not employ a brightening agent, or alternatively wherein step (c) comprises a decolourising step which employs a brightening agent which is not an optical brightening agent, preferably wherein the brightening agent is employed in order to control the recycled paper such that it has a desired brightness of from 65-100% ±2.5%, or 70-100% ±2.5%, in accordance with ISO 2470, more preferably wherein the brightness is 70%±2.5%, 75%±2.5%, 80%±2.5%, 85%±2.5%, 90%±2.5, 95%±2.5% or 100%±2.5% in accordance with ISO 2470, and/or preferably wherein the brightening agent comprises hydrogen peroxide, preferably wherein the hydrogen peroxide is employed in a concentration of 1% by weight or less, and/or wherein the brightening agent comprises sulphur dioxide, preferably wherein sulphur dioxide is employed as a brightening agent where a brightness of 85% or more is desired,
and/or wherein step (d) comprises forming a web of wet paper and then drying the web to form the recycled paper.

4. A method according to any preceding claim, wherein no virgin fibre is added to the waste paper starting material during the method.

5. A method according to any preceding claim, wherein the recycled paper is suitable for office use.

6. A method according to claim 5, wherein the recycled paper is suitable for use in photocopying, printing such as inkjet printing and laser printing, and/or typing.

## Patentansprüche

1. Verfahren zum Herstellen von Recyclingpapier, wobei das Verfahren das Bilden von Recyclingpapier aus einem Abfallpapier-Ausgangsmaterial, ohne Einsetzen eines optischen Aufhellers umfasst, wobei das Abfallpapier-Ausgangsmaterial unsortiertes Büroabfallpapier umfasst, und wobei das Verfahren folgende Schritte umfasst:
(a) Einstampfen des Abfallpapier-Ausgangsmaterials ohne vorheriges Sortieren, um einen Papierbrei zu bilden;
(b) Entfernen von Fremdstoffen aus dem Papierbrei;
(c) Entfärben des und/oder Entfernen von Druckfarbe aus dem Papierbrei; und
(d) Bilden des Recyclingpapiers aus dem Papierbrei.

2. Verfahren nach Anspruch 1, wobei das unsortierte Büroabfallpapier eines oder mehrere Materialien umfasst, die aus Verpackungspapier, Einwickelpapier, selbstklebendem Papier, mit einem Kunststoff oder anderem Polymer beschichtetem Paper, braunem Papier, Karton und Stickies ausgewählt werden,
und/oder wobei das unsortierte Büroabfallpapier im Wesentlichen alle üblicherweise in Büros verwendete Arten von Papier umfasst.

3. Verfahren nach Anspruch 1 oder 2,:
wobei in Schritt (a) der gebildete Papierbrei eine Breikonsistenz von 10 % oder mehr, besser 15 % oder mehr, noch besser 20 % oder mehr aufweist,
und/oder wobei in Schritt (b) die Fremdstoffe einen oder mehrere Fremdstoffe umfassen, die aus verfärbten Fasern, Klebeetiketten und Schmutz ausgewählt werden,
und/oder wobei Schritt (b) Sortieren umfasst, wobei vorzugsweise das Sortieren bei einer Breikonsistenz von 0,1-5 %, besser von 0,4-3,0 % noch besser von 0.5-1,0 % und/oder von 2-2,8 % ausgeführt wird, wobei vorzugsweise das Sortieren optimiert ist, um verfärbte Fasern, wie etwa braune Fasern, zu entfernen,
und/oder wobei Schritt (c) einen Entfärbungsschritt und/oder einen Druckfarbenentfernungsschritt umfasst, der keinen Aufheller verwendet, oder wobei alternativ Schritt (c) einen Entfärbungsschritt umfasst, der einen Aufheller verwendet, bei dem es sich nicht um einen optischen Aufheller handelt, wobei vorzugsweise der Aufheller verwendet wird, um das Recyclingpapier derart zu steuern, dass es eine erwünschte Helligkeit von von 65-100 % ±2,5 % oder 70-100 % ±2,5 % gemäß ISO 2470 aufweist, wobei besser die Helligkeit 70 %±2,5 %, 75 %±2,5 %, 80 %±2,5 %, 85 %±2,5 %, 90 %±2,5, 95 %±2,5 % oder 100 %±2,5 % gemäß ISO 2470 beträgt und/oder wobei vorzugsweise der Aufheller Wasserstoffperoxid umfasst, wobei vorzugsweise das Wasserstoffperoxid in einer Konzentration von 1 Gewichts-% oder weniger verwendet wird, und/oder wobei der Aufheller Schwefeldioxid umfasst, wobei vorzugsweise Schwefeldioxid als Aufheller verwendet wird, wenn eine Helligkeit von 85 % oder mehr erwünscht ist,
und/oder wobei Schritt (d) das Bilden einer Bahn aus nassem Papier und dann das Trocknen der Bahn zum Bilden des Recyclingpapiers umfasst.

4. Verfahren nach einem der vorangehenden Ansprüche, wobei während des Verfahrens keine Neufasern zu dem Abfallpapier-Ausgangsmaterial zugegeben werden.

5. Verfahren nach einem der vorangehenden Ansprüche, wobei das Recyclingpapier für den Bürogebrauch geeignet ist.

6. Verfahren nach Anspruch 5, wobei das Recyclingpapier zur Verwendung beim Fotokopieren, Drucken, wie etwa Tintenstrahldrucken und Laserdrucken und/oder Schreibmaschinenschreiben geeignet ist.

## Revendications

1. Procédé de fabrication de papier recyclé, dont le procédé consiste à former du papier recyclé à partir d'une matière de départ de vieux papiers, sans employer un agent de blanchiment optique, dans lequel la matière de départ de vieux papiers comprend des vieux papiers de bureau non triés, et dans lequel le procédé comprend les étapes suivantes consistant à :
(a) broyer la matière de départ des vieux papiers, sans auparavant procéder à un triage pour produire une pâte à papier ;
(b) enlever les impuretés de la pâte à papier ;
(c) décolorer et/ou désencrer la pâte à papier ; et
(d) former le papier recyclé à partir de la pâte à papier.

2. Procédé selon la revendication 1, dans lequel les vieux papiers de bureau non triés comprennent une ou deux matières sélectionnées parmi des papiers d'emballage, papiers-cadeaux, papiers collants, papiers enduits de plastique ou d'autre polymère, papiers kraft, cartes et autocollants,
et/ou dans lequel les vieux papiers de bureau non triés comprennent en grande partie tous types de papier normalement utilisés dans les bureaux.

3. Procédé selon, soit la revendication 1, soit la revendication 2,
dans lequel, dans l'étape (a), la pâte de papier a une consistance de 10 % ou davantage, de préférence de 15 % ou davantage, de préférence même de 20 % ou davantage,
et/où dans lequel, dans l'étape (b), les impuretés comprennent une ou plusieurs impureté(s) sélectionné(s) parmi des fibres décolorées, des étiquettes adhésives, et de la poussière,
et/où dans lequel l'étape (b) comporte une phase d'épuration, de préférence dans lequel l'épuration est effectuée à une consistance de pâte de 0,1-5 %, de préférence à partir de 0,4-3,0 %, de préférence à partir de 0,5-1,0 % et/ou à partir de 2-2,8 %, de préférence dans lequel l'épuration est optimisée pour supprimer les fibres décolorées, telles que les filaments bruns,
et/ou dans lequel l'étape (c) comporte une étape de décoloration et/ou une étape de désencrage qui n'utilise pas un agent de blanchiment, ou en variante dans lequel l'étape (c) comporte une étape de décoloration qui emploie un agent de blanchiment qui n'est pas un agent de blanchiment optique, de préférence dans lequel l'agent de blanchiment est utilisé pour contrôler le papier recyclé, de sorte qu'il présente une blancheur de 65-100 % ±2,5 %, ou de 70-100 % ±2,5 %, en conformité avec la norme ISO 2470, de préférence dans lequel la blancheur est de 70 % ±2,5 %, 75 % ±2,5 %, 80 % ±2,5 %,85 % % ±2,5 %,90 % ±2,5 %,95 % ±2,5 % ou 100 % ±2,5 % en conformité avec la norme ISO 2470, et/ou de préférence dans lequel l'agent de blanchiment comprend du peroxyde d'hydrogène, de préférence dans lequel le peroxyde d'hydrogène est utilisé dans une concentration de 1 % en poids ou moins, et/ou l'agent de blanchiment comprend du dioxyde de soufre, de préférence dans lequel le dioxyde de soufre est utilisé en tant qu'agent de blanchiment quand l'on souhaite obtenir une blancheur de 85 % ou plus,
et/ou dans lequel l'étape (d) comporte la formation d'une bande de papier humide, puis le séchage de la bande pour former le papier recyclé.

4. Procédé selon l'une quelconque des revendications précédentes, dans lequel aucune fibre vierge n'est ajoutée à la matière de départ de vieux papiers lors du procédé.

5. Procédé selon l'une quelconque des revendications précédentes, dans lequel le papier recyclé convient à un emploi dans les bureaux.

6. Procédé selon la revendication 5, dans lequel le papier recyclé convient à des emplois tels que : photocopie, impression dont l'impression à jet d'encre et l'impression laser, et/ou dactylographie.
